# EUROPEAN PATENT APPLICATION

(11) **EP 2 128 601 A1**
(43) Date of publication of application: **02.12.2009**
(21) Application number: 09170451.0
(22) Date of filing: 20.03.2008
(51) Int. Cl.: G01N 21/35, G01N 33/487

(54) **COPD status determination by FTIR spectral analysis**

(30) Priority: 02.04.2007 GB 0706398; 24.10.2007 GB 0720863
(62) Divisional of application: 08719054.2
(71) Applicant: University Hospital Of North Staffordshire NHS Trust, Staffordshire ST4 7LN (GB)
(72) Inventor: Spiteri, Monica Silverstone, Stoke on Trent, Staffordshire ST4 8BT (GB)
(74) Representative: Smithson, Robert Alan

(57) **Abstract**

There is provided a method of determining the status of chronic obstructive pulmonary disease (COPD) of a human. The method comprises (a) performing a spectral analysis of a sample collected from said human; (b) comparing the spectra produced by said analysis at (a) against a reference; and (c) determining the status of COPD in said human based upon any variations determined at (b). Also provided is an apparatus for determining COPD.

## Description

### Field of the Invention

The present invention relates to methods for determining the status of COPD in humans and to apparatus for use in such methods. The apparatus and methods may facilitate monitoring and management of COPD.

### Background to the Invention

Chronic obstructive pulmonary disease (COPD) is a major public health problem worldwide. The disease has moved from 12^{th} to 5^{th} in the global morbidity ranking in the last 10 years, with an ever-increasing impact on healthcare systems and socio-economic burden in both Western, middle- and low- income countries.

COPD is a common, complex and heterogeneous disease state. The disease is characterised by persistent obstruction to airflow within the bronchial airways, and associated with disabling symptoms including chronic cough, sputum production and dyspnoea. The state of COPD may encompass clinical situations of chronic bronchitis, chronic asthma, bronchiectasis and emphysema (primary as in alpha-1 antitrypsin deficiency and /or secondary to smoking and/or other environmental irritants). Subclinical or undiagnosed COPD may be present within the airways of current and ex-smokers who may exhibit a cough with or without sputum production.

Over almost 90% of patients with diagnosed COPD have difficulty in the simplest of day-to-day activities, being out of breath after simply bathing themselves and/or walking upstairs. Relief of symptoms in patients with COPD is limited as the underlying airflow obstruction in COPD is usually not fully reversible by treatment with conventional bronchodilators. Furthermore, COPD-related airflow limitation is invariably progressive and associated with abnormal inflammatory cellular and biological changes within the airway and consequent structural remodelling of the airway microscopic and macroscopic anatomy.

COPD is frequently associated with acute flare-ups (exacerbations), which are extremely distressing to the individual sufferer and contribute to poor quality of life and poor prognosis. These acute episodes are likely to be precipitated by increased inflammation and/or onset of infection within the bronchial airways. These episodes increase with disease severity, and occur on a background of a variable but persistent progressive natural decline in the patient's lung function. Thus, it is inevitable that a significant number of COPD sufferers require recurrent hospitalisation as their health deteriorates.

COPD is currently assessed by spirometric assessment, specifically FEV₁ (forced expiratory volume in one second) measurements following bronchodilation. COPD 'flare-ups' are diagnosed usually on clinical grounds. These clinical grounds may include a deterioration in specific symptoms (e.g. increased shortness of breath, increased coughing and excessive sputum production) and/or a reduction in exercise tolerance and lung function and/or development of respiratory failure. There is currently no consistent diagnostic test to monitor the individual COPD patient journey, specifically to predict which COPD patients are more prone to natural progression of their disease, rapid deterioration in lung function and to increased exacerbations. Whilst serial spirometric FEV₁ measurements may offer high levels of reproducibility and availability, it is generally accepted that the FEV₁ reflects a very limited aspect of the impact of COPD on a patient's health. Specifically, this conventional method is unhelpful as a predictive marker of disease progression, likely occurrence of acute episodes (flare-ups) and effects of therapeutic intervention.

Assessment of COPD-related airway inflammation and/or infective causes has also been performed by use of invasive methods such as bronchial biopsies, bronchoalveolar lavage or examination of surgical specimens and non-invasive methods such as spontaneous or induced sputum using state-of-the art molecular biological technologies and proteomics. Advances have also included exhaled breath analysis. However, this latter biomarker still requires clinical validation as there appear to be high magnitude differences in measured exhaled volatile organic compounds and nitric oxide markers from individual to individual. Additionally, such measurements may be limited technically because of very low concentrations of exhaled compounds in breath and so diagnostic profiles may not be clinically robust.

Thus current methods are in early stage research or at the pre-clinical trial stage or just not amenable to everyday clinical practice. Furthermore, during infective exacerbations of COPD, routine microbiological analysis of sputum whilst straight forward, is time consuming, involves associated extramural costs and inevitable delayed feedback from testing laboratory to patient and clinician. Clinical usefulness of sputum microbiological analysis in everyday practice may also be hampered by its reliance on sufficient bacterial presence load over usual background respiratory flora.

There remains therefore an unmet clinical need and challenge in COPD for an effective practical means to enable early disease diagnosis, particularly non-invasive characterisation of COPD severity, monitoring of COPD status over time, and early recognition of a COPD 'flare-up' for prompt institution of therapy.

Accordingly, the present invention aims to address at least one disadvantage associated with the prior art whether discussed herein or otherwise.

### Summary of the Invention

According to a first aspect of the present invention there is provided a method of determining the status of chronic obstructive pulmonary disease (COPD) of a human, the method comprising the steps of:
(a) performing a spectral analysis of a sample collected from said human;
(b) comparing the spectra produced by said analysis at (a) against a reference; and
(c) determining the status of COPD in said human based upon any variations determined at (b).

The term "Sputum" is here used synonymously with the term "mucus" as the expectorated product from an individual's airways, usually but not exclusively upper airways, which can be spontaneous and/or induced. In the case of induced sputum, collections may be separated into early, likely upper airway, secretions and later secretions possibly reflecting product from much lower airways.

Suitably, the sample collected from said human comprises a sputum and/or saliva sample.

Suitably, step (a) comprises performing a spectral analysis of a sputum sample collected from said human.

Suitably, said reference used in step (b) comprises a predicted range for a healthy human and/or an individual's own steady-state profile.

Suitably, said reference used in step (b) comprises a predicted range for healthy human sputa and/or an individual's own steady-state profile.

The method of determining the status of COPD may comprise a method of monitoring COPD. The method may for example comprise monitoring a person's COPD state relative to a predicted range for healthy humans and/or said person's own steady-state profile. The method may be employed in the monitoring of COPD, for example by a user in the self-monitoring of COPD.

The method of determining the status of COPD, which suitably comprises monitoring COPD, may comprise a method of managing COPD. The method may be employed in the management of COPD, for example by a user in the self-management of COPD.

Suitably, said spectral analysis performed at (a) comprises FTIR (Fourier Transform Infrared) analysis.

The analysis performed at step (a) may employ one type of spectral method, for example FTIR, together with one or more other spectral methods and/or biosensors and/or biodetectors.

The method may comprise a method of determining the status of one or more of: chronic bronchitis; chronic asthma, bronchiectasis and emphysema (which may be primary as in alpha-1 antitrypsin deficiency and/or secondary to smoking and/or other environmental irritants). The method may comprise a method of determining the status of COPD in persons having subclinical and/or undiagnosed COPD for example, current and ex-smokers who are exhibiting a cough with or without sputum production.

Suitably, the method comprises:
(a) performing a FTIR spectral analysis of a sputum and/or saliva sample collected from said human;
(b) comparing the spectra produced by said analysis at (a) against a reference to determine shifts and/or variations in intensity of the spectra relative to the reference; and
(c) determining the status of COPD in said human based upon any variations determined at (b).

Suitably, step (a) comprises performing a FITR spectral analysis of a sputum sample collected from said human.

Step (b) may comprise comparing a number of regions of the spectra against a reference or references. The or each reference may comprise values, for example wavenumbers and intensities, for a number of spectral features and step (b) may compare variations in each of these between the reference(s) and the spectra from step (a).

Step (c) of determining the status of COPD may comprise determining the presence of COPD. The method may comprise a method for confirming and/or monitoring the status of COPD in a person previously diagnosed with COPD. The method may comprise a method for confirming and/or monitoring the status of COPD in a person at high risk of developing COPD and/or a person with a clinical suspicion of having COPD but as yet not confirmed by conventional methods.

Suitably, the method comprises presenting the determined status of COPD to the sampled human in a user friendly manner. The method may for example comprise presenting one of a limited number of COPD status definitions (for example: "No COPD"; "COPD Presence"; "Stable COPD"; or "COPD Flare-up likely") to a sampled human.

Both healthy sputum/mucus and sputum/mucus from a person having COPD is composed of varying concentrations amongst others, of lectins, charged mucopolysaccharides, glycoproteins, proteins, uronic acid, sialic acid, hexosamine and a variety of other molecules derived from glycoproteins in an aqueous carrier medium. Surprisingly, it has now been found that there may be biochemical patterns that mimic natural and/or pathological cellular and inflammatory events within the airways, specific to normal sputum/mucus from healthy non-smoking humans through to sputum/mucus obtained from humans with an established diagnosis of COPD. Furthermore, the invention incorporates findings that the biochemical pattern of chronic COPD sputum may differ from that of COPD sputum produced during an acute episode. The makeup, for example variance in ratio of the constituents, of the sputum composition may thus reflect the health status of the individual producing it.

FTIR spectroscopy is an established physico-chemical method which measures the vibrations of bonds within functional groups. In FTIR analysis a particular bond absorbs light electromagnetic (EM) radiation at a specific wavelength. For example, the infrared (IR) spectra of proteins exhibit strong amide I absorption bands at around 1653cm⁻¹ associated with the characteristic stretching of C=O and C-N and the bending of the N-H bonds. Therefore by bombarding a biological sample with EM radiation of the many wavelengths in the mid IR range (4000-600cm⁻¹), an IR fingerprint of the biological sample may be produced.

The spectroscopic, preferably FTIR, analysis of sputum according to steps (a) to (c) may thus suitably allow the health status of the person whose sputum is being tested to be determined. That health status may be a measure of the person's health compared to a standard and/or compared to a previous determination of the person's health, for example, baseline profile performed at the point of diagnosis.
Suitably, step (a) comprises a person providing a sputum or saliva sample and the sample being analysed.

Suitably, step (a) comprises a person coughing up sputum and a sample being analysed. The person may cough up sputum spontaneously or sputum production may be induced. Suitably, an untreated sputum sample is located into the sample area of a spectrometer and analysed, suitably automatically.

A person may provide a sputum or saliva sample and present it to a spectrometer for analysis in step (a). Suitably a person provides a sputum sample and presents it to a spectrometer for analysis in step (a) of the method. Alternatively, they may provide their sample to a third party such as a doctor or nurse for them to present to a spectrometer for analysis in step (a). Once analysed any remaining sample is suitably disposed of.

Suitably, the spectrometer comprises an FTIR spectrometer. A suitable spectrometer may comprise a Spectrum GX FT-IR (PerkinElmer) and/or similar spectroscopic analytical apparatus. Preferably, for clinical purposes the spectrometer used in the method is portable, suitable for use within a diagnostic suite and amenable for home use.

The reference used in step (b) may comprise a reference spectra. The reference spectra may comprise a spectra for a healthy (non COPD) human. A healthy (non COPD) human may be defined as an individual who has no current or previous chronic respiratory symptom history and/or diagnosis of any chronic respiratory disease, normal physiological lung function parameters as examined by conventional methods and normal chest radiography. The reference spectra may be an averaged spectra produced from analysis of a number of healthy (non COPD) human sputa/saliva, suitably sputa.

Alternatively, the reference spectra may comprise a spectra for a human diagnosed with COPD. The reference spectra may be an averaged spectra produced from analysis of sputa/saliva, suitably sputa, from a number of humans diagnosed with COPD.

Where the reference is for a healthy (non COPD) human the sputum sample may be obtained by an induced sputum technique.

The determination performed at step (c) may be of the status of COPD in said human measured relative to a healthy (non COPD) human. This may be used to measure disease presence and/or disease progression over time and/or the predictive onset ('early warning') of flare-ups occurring and/or response to medical intervention such as for example response to introduction of, or modification of, inhaled and/or systemic (for example ingested, intravenous, intramuscular and/or subcutaneous) treatments.

Alternatively, or in addition the determination performed at step (c) may be of the status of COPD (degree of severity) in said human measured relative to a human diagnosed with COPD. Such a status determination is suitably of the degree of severity of COPD in said human measured relative to a human diagnosed with COPD. This may be used to measure disease presence and/or likely predictive outcome and/or progression over time and/or the early warning/likelihood of flare-ups occurring and/or response to medical intervention.

The determination performed at step (c) may comprise a diagnosis of COPD.

A flare-up may also be known as an acute episode, an acute exacerbation of COPD or as acute-on-chronic bronchitis.

A flare-up may be characterised by a change in clinical symptoms which may include: increased sputum production; increased cough; increased shortness of breath; reduced exercise tolerance; increased effort or inability to perform daily chores and/or self caring; and/or decrease in general health.

The reference spectra may comprise a spectra for the human whose sputum/saliva, suitably sputa, is analysed at (a), which reference spectra was recorded previously.

The determination performed at step (c) may thus be of the status of COPD in said human measured relative to a previous status of COPD in said human. This may be used to measure disease progression and/or the predictive onset/likelihood of flare-ups occurring. The method may be used to measure disease progression and/or the predictive onset/likelihood of flare-ups occurring before deterioration of steady or usual clinical state and onset/increase of symptoms.

Alternatively, or in addition, the reference used in step (b) may comprise a reference point and/or value. Suitably, the reference comprises one or more reference points and/or values. The reference may for example comprise a wavenumber and/or intensity for a spectral feature, such as a peak. The reference used in step (b) may comprise a number of reference points and/or values. The reference points and/or values may be taken from a number of regions of a reference spectra. The reference may for example comprise a specific pattern within the given profile.

The reference point/value(s) may comprise a point/value(s) for a healthy (non COPD) human. The reference point/value(s) may be an averaged point/value(s) produced from analysis of a number of healthy (non COPD) human sputa.

The determination performed at step (c) may thus be of the status of COPD in said human measured relative to a healthy (non COPD) human.

The reference point/value(s) may comprise a point/value(s) for the human whose sputum/saliva, suitably sputa, is analysed at (a), which reference point/value was recorded previously.

The determination performed at step (c) may thus be of the status of COPD in said human measured relative to a previous status of COPD in said human.

Step (b) may comprise comparing the spectra produced by said analysis at (a) against a number of references to determine shifts and/or variations in intensity and/or patterns of the spectra relative to the references. Each reference may comprise a spectra or one or more, preferably a plurality of, reference points/values derived from a spectra. Suitably the references comprises reference corresponding to a variety of statuses of COPD.

Step (b) may comprise comparing the spectra against a reference (r1) corresponding to a healthy (non COPD) human.

Step (b) may comprise comparing the spectra against a reference (r2) corresponding to that of a human having COPD at a time when they are not experiencing flare-ups. Said reference (r2) may be from a time during the stable phase of a person's COPD (otherwise-called steady or usual clinical state), suitably whether they are receiving medical treatment or not.

Step (b) may comprise comparing the spectra against a reference (r3) corresponding to that of a human having COPD at a time of a flare-up. Said reference (r3) may be from a time around a flare-up which may include events immediately before, during or after the acute episode. Said reference may include capture of changes induced by introduction of and/or changes made to medical treatment.

Step (b) may comprise making a comparison with two or more, for example all three, of (r1), (r2) and (r3). The status of COPD in the human may be determined by the most closely matching reference.

Suitably, step (b) comprises comparing the spectra produced by said analysis at (a) against a reference to determine shifts, suitably wavenumber shifts, of the spectra relative to the reference.

Suitably, step (b) comprises comparing the spectra around the 1560 cm⁻¹ wavenumber against a reference to determine the shift of a peak occurring at around 1559 cm⁻¹ in a healthy person.

The reference may comprise a reference point which may comprise a wavenumber of 1559 cm⁻¹. Step (b) may comprise analysing the spectra moving from 1559 cm⁻¹ to higher wavenumbers until a peak is noted. The shift which is determined may thus be the difference between 1559 cm⁻¹ and the noted peak.

Step (c) may comprise determining the status of COPD based upon the degree of shift determined at (b). Step (c) may comprise producing a profile that is different from a predicted healthy norm. The magnitude of the shift may correlate to COPD severity. The greater the shift the more advanced the COPD may be and/or the greater the degree of the acute episode.

Step (c) may comprise determining the status of COPD based upon the degree of shift around 1560 cm⁻¹ determined at (b).

A peak lying around 1559 cm⁻¹ may for example indicate a healthy (non COPD) person. The peak may shift to 1560 cm or higher, for example 1560.5 cm⁻¹ or higher, for example around 1561 cm⁻¹ for a COPD person.

The shift of the peak from around 1559 cm⁻¹ (for example between 1558. 80 cm⁻¹ and 1559.0 cm⁻¹) to or towards around 1561 cm⁻¹ (for example between 1560.84 cm⁻¹ and 1561.04 cm ¹) may indicate that a person has COPD but that an acute event (flare-up) is not imminent. As used herein, "not imminent" means there is little probability of an acute event occurring within 24 hours of testing. "Little probability" may refer to a probability of 20% or less.

The shift of the peak from around 1559 cm⁻¹ (for example between 1558.80 cm⁻¹ and 1559.0 cm⁻¹) to around 1561 cm⁻¹ (for example between 1560.84 cm⁻¹ and 1561.04 cm⁻¹) or greater, may indicate that a person has COPD and that an acute event (flare-up) is imminent. As used herein, "imminent" means there is a high probability of an acute event occurring within 48-72 hours of testing. "High probability" may refer to a probability of 80% or more.

The shift in peak may be proportional to the severity of the acute episode and may depend on co-committant presence/absence of bronchial infection, which may be bacterial or viral. The shift in peak may be proportional to heightened airway inflammation whether due to increased oxidative stress products, cellular shifts, enhanced biological mediators or other pro-inflammatory events and/or onset of associated complications such as respiratory failure and cor pulmonale. Patterns and magnitudes of current flare-ups may be referenced to individual own previous flare-up profiles. The method may thus also predict the likely severity of a flare-up based on the comparative degree of spectral shift as well as the likelihood of a flare-up occurring. The individual may then decide they need to introduce new treatment or modify existing medication to prevent and/or minimise his or her flare-up. The method may further determine response to introduction of new therapy or changes thereof.

Step (b) may comprise comparing the spectra around the 1070 cm⁻¹ to 1080 cm⁻¹ wavenumber against a reference to determine the shift of a peak occurring at around 1077 cm⁻¹ in a healthy person.

The reference may comprise a reference point which may comprise a wavenumber of 1077 cm⁻¹. Step (b) may comprise analysing the spectra moving from 1077 cm⁻¹ to 1070 cm⁻¹ until a peak is noted. The shift which is determined may thus be the difference between 1077 cm⁻¹ and the noted peak.

Step (c) may comprise determining the status of COPD based upon the degree of shift around the 1070 cm⁻¹ to 1080 cm⁻¹ region determined at (b).

A peak lying around 1077 cm⁻¹ may for example indicate a healthy (non COPD) person and a move to around 1072 cm⁻¹ to 1073 cm⁻¹ may indicate a person has COPD.

Step (b) may comprise comparing the spectra around the 3330 cm⁻¹ to 3260 cm⁻¹ wavenumbers against a reference.

Step (b) may comprise comparing the spectra around the 3330 cm⁻¹ to 3260 cm⁻¹ wavenumbers against a reference to determine the shift of a peak occurring at around 3300 cm⁻¹ in a healthy person.

The reference may comprise a reference point which may comprise a wavenumber of 3300 cm⁻¹. Step (b) may comprise analysing the spectra moving from 3330 cm⁻¹ to lower wavenumbers until a peak is noted. The shift which is determined may thus be the difference between 3300 cm⁻¹ and the noted peak.

A peak lying around 3300 cm⁻¹, for example between 3305 and 3295, may for example indicate a healthy (non COPD) person. A shift of the peak away from around 3300 cm⁻¹, for example down towards 3280 cm⁻¹, may indicate that a person has COPD but that an acute event (flare-up) is not imminent. A shift of the peak below 3280 cm⁻¹ may indicate that a person has COPD and that an acute event (flare-up) is imminent.

Step (b) may comprise comparing the spectra around the 3330 cm⁻¹ to 3260 cm⁻¹ wavenumbers against a reference to determine the number of peaks occurring in this region, for example around 3300 cm⁻¹, and their spread.

Suitably, step (b) comprises comparing the spectra around the 3320 cm⁻¹ to 3280 cm⁻¹ wavenumbers against a reference to determine the number of peaks occurring in this region and their spread. The spectra of a person having COPD may exhibit a greater number of peaks in this region and/or a greater spread of peaks than that of a non COPD person.

A spectra for a non COPD person may for example have peaks distributed between lower and upper limits of 3293 cm⁻¹ and 3306 cm⁻¹ whereas a person with COPD may have a greater range which may be between lower and upper limits of 3284 cm⁻¹ and 3315 cm⁻¹.

Suitably, the method comprises assessing whether any peaks lie between 3292 cm⁻¹ and 3284 cm⁻¹ and/or between 3307 cm⁻¹ and 3315 cm⁻¹ The presence of peaks in these regions may indicate a person has COPD.

Whilst the 3330 to 3260 cm⁻¹ wavenumber region may provide valuable information it may be preferred to study the 1059 to 1061 cm⁻¹ and/or 1070 to 1080 cm⁻¹ wavenumber region. Information from this region may be useful in combination with information from other regions.
Suitably, step (b) comprises comparing the spectra produced by said analysis at (a) against a reference to determine variations in the intensity of the spectra relative to the reference.

Suitably, step (b) comprises comparing the spectra around the 1070 cm⁻¹ to 1080 cm⁻¹ wavenumbers against a reference to determine the increase in intensity of a peak occurring in this region. Said peak may be at around 1077cm⁻¹ in a healthy (non COPD) person. A patient with COPD may exhibit a shift as well as an increase, which may be a 3-ford increase, in intensity of the peak compared with the spectra of a healthy (non COPD) person. In a patient with COPD the peak may occur at between 1072cm⁻¹ and 1073cm⁻¹. The method may comprise comparing the increase in band intensity at around 1075 cm⁻¹.

Step (c) may comprise determining the status of COPD based upon the degree of increase determined at (b). The greater the increase the more advanced and/or acute the COPD may be.

Step (b) may comprise comparing the spectra around the 1050 to 1030 cm⁻¹ wavenumber against a reference to determine the increase in intensity of a peak occurring at 1050 to 1030 cm⁻¹ in a healthy (non COPD) person. A patient with COPD may for example exhibit a 3-fold increase in intensity of the peak occurring at 1050 to 1030 cm⁻¹ compared with the spectra of a healthy (non COPD) person.

Whilst the 1050 to 1030 cm⁻¹ wavenumber region may provide valuable information it may be preferred to study the 1070 to 1080 cm⁻¹ wavenumber region.

Step (b) may comprise comparing the spectra around the 1450 cm⁻¹ to 1470 cm⁻¹ region against a reference to determine variations in the spectra around these wavenumbers. A peak may for example occur at around 1458 cm⁻¹ in the spectra of a person with COPD and may be less intense or absent for a person who does not have COPD.

Step (b) may comprise comparing the spectra around the 2940 cm⁻¹ to 2960 cm⁻¹ region against a reference to determine variations in the spectra around these wavenumbers. A peak may for example occur at around 2950 cm⁻¹ in the spectra of a person with COPD and may be less intense for a person who does not have COPD.

Step (b) may comprise comparing the spectra around the 520 cm⁻¹ to 540 cm⁻¹ region against a reference to determine variations in the spectra around these wavenumbers. A peak may for example occur at around 529 cm⁻¹ in the spectra of a person with COPD and may be less intense in a person who does not have COPD.

The spectra of a person having COPD may not necessarily exhibit changes from that of a non COPD spectra in all spectral regions. The method may thus comprise comparing several spectral regions and making a determination of the COPD status based on a comparison of a combination of regions. The spectral regions of interest may be those corresponding to vibrational bands assigned as amide A protein and/or amide II and/or glycogen rich bands.

Other factors besides COPD may affect spectral shifts and intensities. Accordingly, for any given spectral region discussed herein some COPD patients might exhibit peaks at frequencies and/or intensities found in a healthy subject and vice versa. Using information from a number of regions may thus give a more reliable indication of COPD status. Suitably, the method uses reference values for the 1070 to 1080 cm⁻¹ and 1560 cm⁻¹ regions. The method may further use reference values from the 3330 to 3260 cm⁻¹ and 1030 to 1050 cm⁻¹ regions.

The method suitably comprises comparing regions in the mid-IR spectrum. The method may comprise comparing regions outside the immediate mid-IR spectrum.

The method may comprise a means for a COPD sufferer to monitor the status and suitably the progression of their own disease and may allow them to monitor their response to medication.

The method may comprise a person having COPD providing samples on a regular basis, for example weekly or preferably daily. The method suitably allows for individual patient monitoring at home. The method may reduce or avoid the need to attend a general practitioner and/or specialist clinics and/or send samples to a laboratory for analysis.

A person having COPD may provide a sample when they do not have acute symptoms, suitably during the stable phase of their illness, and this may provide a reference, for example (r2). This may be a "self-fingerprint" sputum profile. A person having COPD may provide a sample when they have acute symptoms and this may provide a reference, for example (r3). This may be a "self-fingerprint" sputum profile.

A person's own references for example (r2) and/or (r3), (suitably self-fingerprint sputum profiles), may be used for comparison with a sample taken subsequently. The sample may be compared with the reference or references to determine which COPD status most closely matches the person's current status in order to indicate their current COPD status. This may determine disease severity and treatment effect.

Clinically such a method may be useful for screening of 'high risk' individuals such as life long smokers at increased risk of developing COPD. For example, current or ex-smokers or passive smokers may monitor their own status or be screened routinely for early signs of development of COPD. It is possible that early warning of onset of COPD could encourage active smokers to stop smoking and/or be treated with suitable inhaled therapy to avert natural progressive decline of airways function and chronicity of respiratory symptoms.

Suitably, where a patient's own references are used the subsequent sample/s is/are taken at around the same time of day to allow for diurnal variation and consistency. Suitably, a person may be sampled regularly, for example weekly or daily to monitor disease progression. This may allow the monitoring of disease progression over time and the need to effect new medication and/or changes to existent therapy. Each sample may be added to a reference bank to be used for comparison with subsequent samples.

Suitably, said comparison and determination are performed by a machine, for example by an automated device with immediate user-friendly feedback to the user.

The method suitably employs an apparatus as described in relation to the second aspect hereafter.

According to a second aspect of the present invention, there is provided an apparatus for:
a) performing a spectral analysis of a human sample;
(b) comparing the spectra produced by said analysis at (a) against a reference; and
(c) determining the status of COPD of said human based upon any variations determined at (b);
wherein said apparatus comprises:
(i) a spectrometer for producing said spectra;
(ii) reference means for storing reference details to compare said spectra against;
(iii) comparison means for comparing the spectra and reference to determine the status of COPD; and
(iv) indicator means for indicating said COPD status.

Suitably, the human sample comprises a human sputum and/or saliva sample.

Suitably, the apparatus is arranged for performing a spectral analysis of a human sputum sample.

Suitably, said spectral analysis performed at (a) comprises FTIR analysis and the spectrometer (i) comprises an FTIR spectrometer.

The reference means (ii) suitably comprises a storage means, suitably an electronic storage means. The reference means (ii) may be pre-loaded with reference details and/or reference details may be added through use.

Suitably, the comparison means (iii) comprises computational means for comparing the spectra and reference to determine the status of COPD.

The apparatus may comprise a portable diagnostic device, preferably a user-friendly home-testing apparatus. The apparatus may comprise a single unit which suitably comprises a spectrometer and software for interpreting the spectroscopic data, comparing it to a reference and providing a message to be presented to a user by the indicator means.

The apparatus suitably comprises a spectroscopic analytical capability, suitably FTIR capability, for producing spectra and a reference means comprising stored details to compare said spectra against.

The apparatus suitably comprises computational means for comparing the spectra and reference to determine automatically the presence and/or status of COPD.

The apparatus may comprise indicator means for demonstrating and providing, in real-time or near-real time, feedback to a user on said COPD status.

The apparatus may comprise a portable diagnostic device comprising a spectrometer with real-time/near-time spectroscopic capability and is suitably primarily FTIR-driven. Said apparatus is suitably capable of receiving and analysing sputa, and may be provided complete with appropriate sampling accessories.

The reference means for storing reference details may be a separate reference guide, such as a separate manual and/or more preferably reference program which may be downloadable.

Preferably, the reference means comprises an integral part of the spectrometer comprising apparatus. The apparatus may incorporate an automated reference guide and data processor, suitably in a consumer-friendly device.

The stored reference details may comprise a bank of the relevant portions of the FTIR spectrum in relation to health and steady state status, to onset and evolutionary natural development of COPD and to changing status of COPD. This bank may be generated and/or added to through use of the apparatus.

The stored reference details may also incorporate add-on bias from exogenous factors such as tobacco smoke inhalation/habits; diet; medication and other medical co-morbidities. This may allow generation of day-to-day standard, practical predictive ranges of the relevant portions of the spectra, suitably FTIR spectra, in relation to steady state healthy and COPD status.

Suitably, the apparatus is arranged to capture the FTIR spectra and clinical physiological data of a patient and to run algorithms based on captured data and stored references in order to allow COPD monitoring and prediction of flare-ups.

The computational means may comprise a fast data acquisition, processing and analytical computation program in which the relevant FTIR information may be incorporated. Said program may be installed into a portable FTIR device, primarily but not exclusively intended for home use.

The apparatus may comprise indicator means which comprises a user-friendly easy feedback system. The indicator means may provide a 'traffic light-like' signal to the user such that green reflects normal health, amber reflects likely pathological changes within bronchial airways such as onset of inflammation but not presence of a disease state such as COPD, and red would indicate presence of COPD. Within each colour-referenced range (defined as a region) there may be incorporated different levels of status so that progress of a status can be monitored over time within each 'region' as well as movement across regions. This may also allow monitoring of response to changes of habit such as stopping smoking and/or introduction or changes of medication.

Suitably, the apparatus is made of lightweight material, is portable and robust and incorporates a high performance FTIR spectroscopic capability to analyse the sputum/saliva, suitably sputum.

The sputum/saliva, suitably sputum, may be received by an in-built reservoir or receptacle of the apparatus into which a sample of the sputum/saliva, suitably sputum, can be transferred by the use of a disposable stick or microspatula.

Alternatively, the apparatus may comprise an end retractable sensor head which can then be used for scanning in situ the expectorated sputum/saliva, suitably sputum, sample. The head will be made of a material that can be easily cleaned, for example with alcohol swabs.

Suitably, the apparatus is arranged for use in a method which comprises:
(a) performing an FTIR spectral analysis of a human sputum and/or saliva sample;
(b) comparing the spectra produced by said analysis at (a) against a reference to determine shifts and/or variations in intensity of the spectra relative to the reference; and
(c) determining the status of COPD of said human based upon any variations determined at (b).

Suitably, step (a) comprises performing an FTIR spectral analysis of a human sputum sample.

A suitable spectrometer may comprise a Spectrum GX FT-IR(Perkin Elmer) or equivalent apparatus. Preferably, the spectrometer comprises a miniaturised FTIR-driven system.

The spectrometer may have a resolution of around 4 cm⁻¹, for example of around 2 cm⁻¹ or better, for example 1 cm⁻¹ or 0.5 cm⁻¹.

The spectrometer may have a scan range of around 7800-370 cm⁻¹

The spectrometer may have an IR laser wavenumber of around 15798.01 cm⁻¹.

The apparatus may comprise any feature as described in relation to the first aspect.

### Brief description of the drawings

The present invention will now be illustrated by way of example with reference to the accompanying drawings in which:
Figure 1 illustrates an FTIR spectra for a normal (COPD free) human and a human having COPD with spectral variance in the region of 1070 to 1080 cm⁻¹,
Figure 2 illustrates an FTIR spectra for a normal (COPD free) human and a human having COPD with spectral variance at around 1560 cm⁻¹.
Figure 3 illustrates the distribution in peak frequency in the region of 1560 cm⁻¹ for sampled subjects.
Figure 4 illustrates an FTIR spectra for a normal (COPD free) human and a human having COPD with spectral variance at around 3300 cm⁻¹

### Detailed description of preferred embodiments

### Experimental detail

Spontaneously expectorated/induced sputum from 15 stable mild to moderate COPD patients with a forced expiratory volume in 1 second (FEV₁) of <80% but >40% were studied. As a control, induced sputum from 15 healthy non smoking volunteers with no significant past/current medical history and normal spirometry were studied. Sputum production was induced using nebulisation of 3% sterile saline solution via a DeVilbiss UltraNeb 2000 nebuliser for 7 minutes, after which any expectorated sputum was collected. Nebulisation was continued for a further 7 minutes and the expectorated sputum collected. Sputum was then analysed using bench-top laboratory-based fourier transform infra-red (FTIR) spectroscopy. Approximately 100µl of sputum was pipetted onto a Barium Flouride polished window and allowed to dry. FTIR analysis was then preformed.

### Apparatus

FTIR analysis of the sputum was performed using a Spectrum GX FT-IR(Perkin Elmer) which has inbuilt software (Version 4.07)to analyse the spectra. The system has a resolution of 4 cm⁻¹, a scan range of 7800-370 cm⁻¹ and the IR laser wavenumber is 15798.01 cm⁻¹.

### Results

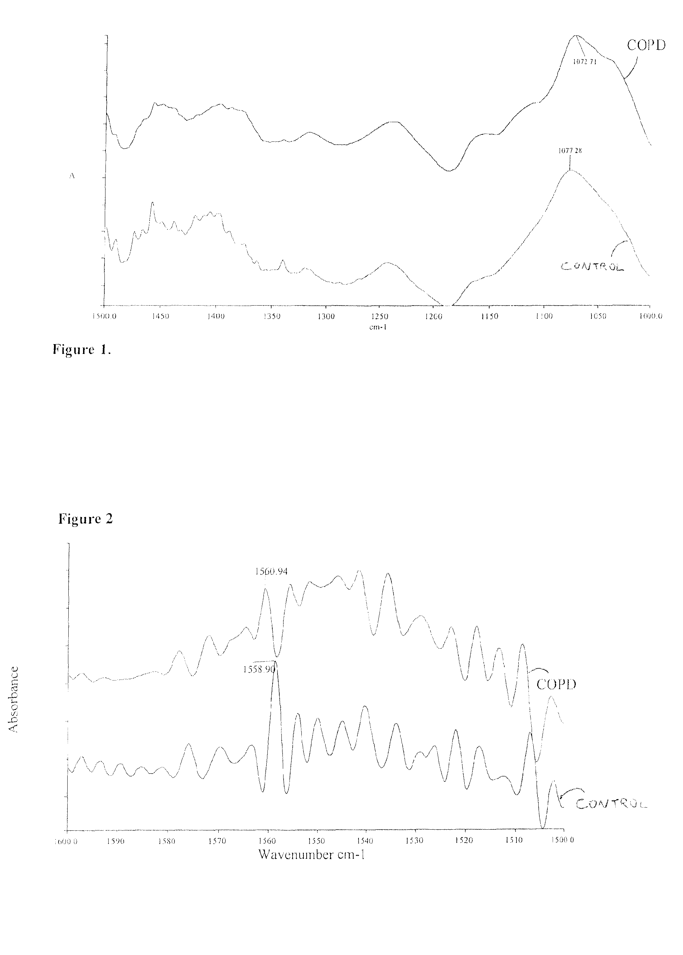

Figures 1 to 4 illustrate sample results from the tests. Whilst there are variances in the spectra of the control subjects when compared to one another, and in the spectra of the COPD subjects when compared to one another, the variances between control and COPD subjects were marked and there were consistent variances.

For the band in the 1070 to 1080 cm⁻¹ region there was an approximate 3-fold increase in intensity for COPD subjects compared to control subjects. A band in this region may be attributed to CH₂OH vibrations, C-N vibrations (amines) - and the C-O stretching coupled with C-O bending of the C-OH carbohydrates which are frequently found in glycogen rich tissue. DNA may also produce a peak in this region.
As can be seen from Figure 1 there was also a shift in the peak in the 1070 to 1080 cm⁻¹ region from around 1077 cm⁻¹ in control subjects to around 1072 to 1073 cm⁻¹ in COPD subjects.

It can also be seen from Figure 1 that there was an increase in intensity in the 1030 to 1050 cm⁻¹ region for COPD subjects compared to control subjects.

Control subjects had a band at around 1559 cm⁻¹ which may be attributable to the amide II region. In COPD subjects this band shifts to around 1561 cm⁻¹. This band may be attributed to the presence of nitro compounds (NO₂). Nitro compounds are understood to be produced by shifts in the differential proportions of inflammatory cells within the airways for example neutrophils which have been found to be present within the airways of subjects with COPD, and to change in proportion depending on the severity and particular clinical phase of the disease.

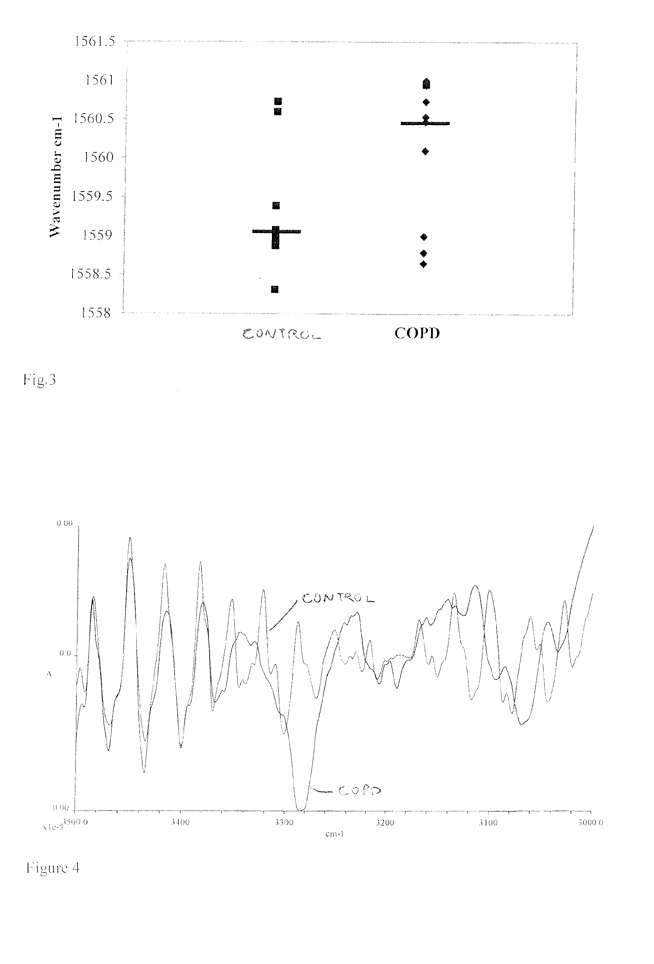

Figure 3 illustrates the distribution in peak frequency in the region of 1560 cm⁻¹ for control subjects (n=15) and COPD subjects (n=15). This indicates a clear difference in peak frequency in the 1560 cm⁻¹ region.

As shown by Figure 4, at around 3300 cm⁻¹ there was a band in the control subjects which may be attributable to amide A. In COPD subjects sputum exhibited greater variability in peak frequency, ranging from 3315 to 3285cm⁻¹ compared to 3305 to 3293 cm⁻¹ in healthy subjects. Various compounds such as proteins, alkeynes, alcohols, phenols and carboxylic acids may produce a peak in this region.

A number of persons with COPD also exhibited peaks at 1458 cm⁻¹ which were significantly more intense than those in persons without COPD. However, not all persons with COPD exhibited this spectral change and thus this may not be a definitive guide. Similarly, some persons with COPD exhibited more intense spectral peaks at around 529 cm⁻¹ and 2950 cm⁻¹.

The variance in intensity at around 1070 to 1080 cm⁻¹ (and to an extent also the variance at around 1030 to 1050 cm⁻¹), the shifts at around 1560 cm⁻¹ and within the 1070 to 1080cm⁻¹ region and also to an extent changes in frequency and/or patterns of frequency of peaks in the region of 3300 cm⁻¹ may each allow the status of COPD in a human to be determined. The spectral regions of interest may be those corresponding to vibrational bands assigned as amide A protein, amide II and glycogen rich bands.

It will be appreciated that preferred embodiments of the present invention may provide a COPD predictor which is specific to the individual COPD sufferer and easy to use at home to identify early onset of his/her flare-ups. That may enable early self-introduction of appropriate therapy as appropriate and/or self-modifications in existent medication, thereby preventing the need to see a doctor and/or hospitalisation.

The novel application of FTIR spectroscopy of preferred embodiments may allow profiling and biomarker fingerprinting of expectorated bronchial airway mucus to provide a clinically effective and efficient means for providing information on COPD disease and to enable early warning of acute symptomatic flare-ups.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of determining the status of chronic obstructive pulmonary disease (COPD) of a human, the method comprising the steps of:
(a) performing a spectral analysis of a saliva sample collected from said human;
(b) comparing the spectra produced by said analysis at (a) against a reference; and
(c) determining the status of COPD in said human based upon any variations determined at (b).

2. A method according to claim 1, wherein said reference used in step (b) comprises a predicted range for a healthy human and/or an individual's own steady-state profile.

3. A method according to either of claim 1 or claim 2, wherein said spectral analysis performed at (a) comprises FTIR (Fourier Transform Infrared) analysis.

4. A method according to any preceding claim, wherein the method comprises:
(a) performing a FTIR spectral analysis of a saliva sample collected from said human;
(b) comparing the spectra produced by said analysis at (a) against a reference to determine shifts and/or variations in intensity of the spectra relative to the reference; and
(c) determining the status of COPD in said human based upon any variations determined at (b).

5. A method according to any preceding claim, wherein step (b) comprises comparing the spectra produced by said analysis at (a) against a number of references to determine shifts and/or variations in intensity and/or patterns of the spectra relative to the references.

6. A method according to any preceding claim, wherein step (c) comprises determining the status of COPD based upon the degree of shift of spectra around one or more of the following regions determined at (b): 520cm⁻¹ to 540cm⁻¹; 1030cm⁻¹ to 1050cm⁻¹; 1070cm⁻¹ to 1080cm⁻¹; 1450cm⁻¹ to 1470cm⁻¹; 1560cm⁻¹; 2940cm⁻¹ to 2960cm⁻¹; 3260cm⁻¹ to 3330cm⁻¹.

7. A method according to any preceding claim, wherein step (b) comprises comparing the spectra against a reference (r1) corresponding to a healthy (non COPD) human and comprises comparing the spectra against a reference (r2) corresponding to that of a human having COPD at a time when they are not experiencing flare-ups and comprises comparing the spectra against a reference (r3) corresponding to that of a human having COPD at a time of a flare-up and wherein step (b) comprises making a comparison with (r1), (r2) and (r3) and status of COPD in the human is determined by the most closely matching reference.

8. An apparatus for:
a) performing a spectral analysis of a human saliva sample;
(b) comparing the spectra produced by said analysis at (a) against a reference; and
(c) determining the status of COPD of said human based upon any variations determined at (b);
wherein said apparatus comprises:
(i) a spectrometer for producing said spectra;
(ii) reference means for storing reference details to compare said spectra against;
(iii) comparison means for comparing the spectra and reference to determine the status of COPD; and
(iv) indicator means for indicating said COPD status.

9. An apparatus according to claim 8, wherein the spectrometer (i) is operable to undertake spectral analysis around one or more of the following regions: 520cm⁻¹ to 540cm⁻¹; 1030cm⁻¹ to 1050cm⁻¹; 1070cm⁻¹ to 1080cm⁻¹; 1450cm⁻¹ to 1470cm⁻¹; 1560cm⁻¹; 2940cm⁻¹ to 2960cm⁻¹; 3260cm⁻¹ to 3330cm⁻¹.

10. An apparatus according to either of claim 8 or claim 9, wherein said spectral analysis performed at (a) comprises FTIR analysis and the spectrometer (i) comprises an FTIR spectrometer.

11. An apparatus according to any of claims 8 to 10, wherein the reference means (ii) comprises an electronic storage means and wherein the reference means (ii) is pre-loaded with reference details and/or reference details are added through use.

12. An apparatus according to any of claims 8 to 11, wherein the comparison means (iii) comprises computational means for comparing the spectra and reference to determine the status of COPD.

13. An apparatus according to any of claims 8 to 12, wherein the apparatus comprises indicator means for demonstrating and providing, in real-time or near-real time, feedback to a user on said COPD status.

14. An apparatus according to any of claims 8 to 13, wherein the apparatus is arranged for use in a method which comprises:
(a) performing an FTIR spectral analysis of a human saliva sample;
(b) comparing the spectra produced by said analysis at (a) against a reference to determine shifts and/or variations in intensity of the spectra relative to the reference; and
(c) determining the status of COPD of said human based upon any variations determined at (b).
